# EUROPÄISCHE PATENTSCHRIFT

(11) **EP 3 724 553 B1**
(45) Veröffentlichungstag und Bekanntmachung des Hinweises auf die Patenterteilung: **23.11.2022**
(21) Anmeldenummer: 18827008.6
(22) Anmeldetag: 13.12.2018
(51) Int. Cl.: F24F 12/00, F24F 13/22

(54) **LÜFTUNGSGERÄT FÜR EIN GEBÄUDE**
VENTILATION DEVICE FOR A BUILDING
APPAREIL DE VENTILATION POUR UN BÂTIMENT

(30) Priorität: 15.12.2017 DE 102017011634
(43) Veröffentlichungstag der Anmeldung: 21.10.2020
(73) Patentinhaber: Stiebel Eltron GmbH & Co. KG, 37603 Holzminden (DE)
(72) Erfinder: NEUGEBAUER, Johannes, 33609 Bielefeld (DE); SMOLLICH, Steffen, 37603 Holzminden (DE)
(74) Vertreter: Eisenführ Speiser
(86) Internationale Anmeldenummer: PCT/EP2018/084840
(87) Internationale Veröffentlichungsnummer: WO 2019/115730

(56) Entgegenhaltungen:
- EP-A1- 1 331 458
- WO-A1-2012/153163
- WO-A1-2013/075722
- DE-A1-102005 047 247
- US-A- 5 074 119

## Beschreibung

Die vorliegende Erfindung bezieht sich auf ein Lüftungsgerät mit zumindest einem Gehäuse und wenigstens einem im Gehäuse angeordneten Wärmeübertrager für einen durch das Lüftungsgerät geleiteten Abluftstrom und einen durch das Lüftungsgerät geleiteten Frischluftstrom.

Lüftungsgeräte sind im Stand der Technik bekannt und dienen beispielsweise dazu, die Zuluft und Abluft zu Räumen in Gebäuden zu steuern. Ferner werden die Lüftungsgeräte eingesetzt, um eine Wärmerückgewinnung zu ermöglichen, indem Teile der in der Abluft enthaltenen Wärmeenergie auf die Frischluft übertragen werden. Dazu weisen die Lüftungsgeräte üblicherweise einen Wärmeübertrager auf.

So offenbart beispielsweise EP 1 331 458 A1 ein Lüftungsgerät zur Belüftung eines Raumes, das zumindest eine Kondensationsvorrichtung zur Kondensation von Feuchtigkeit aus Luft, die durch das Gerät geführt wird, aufweist, wobei das Lüftungsgerät eine Vorrichtung zum Behandeln des erzeugten Kondensats aufweist.

Außerdem ist aus der WO 2013/075722 A1 ein Lüftungsgerät gemäß dem Oberbegriff des Anspruchs 1 bekannt.

Lüftungsgeräte müssen regelmäßig gewartet werden, damit eine dauerhafte und effektive Funktionsweise des Lüftungsgeräts garantiert werden kann. Bei der Wartung ist es häufig notwendig, ein oder mehrere Geräte-Komponenten des Lüftungsgeräts zu entnehmen, zu reinigen und wieder einzusetzen oder bei Bedarf auszutauschen.

An aus dem Stand der Technik bekannten Lüftungsgeräten ist ein Austausch der einzelnen Geräte-Komponenten der bereits bekannten Lüftungsgeräte meist aufwendig. Oft können nur wenige Teile ohne großen Aufwand bei der Demontage entnommen werden. Dies liegt oft auch an dem vergleichsweise komplizierten Aufbau und/oder der Anordnung der einzelnen Geräte-Komponenten in bereits bekannten Lüftungsgeräten.

Ein problemloser, schneller und funktionserhaltender Austausch der einzelnen Geräte-Komponenten, insbesondere eines Wärmeübertragers, Luftfilters oder einer Kondensatpumpe an einem Lüftungsgerät, stellt eine primäre Anforderung an den technischen Aufbau des Lüftungsgeräts dar. Insbesondere ein modularer Aufbau eines Lüftungsgeräts, der es ermöglicht, jede einzelne Geräte-Komponente des Lüftungsgeräts, wie insbesondere den Wärmeübertrager oder die Luftfilter problemlos, schnell und funktionserhaltend auszutauschen, war daher eine primäre Aufgabe der vorliegenden Erfindung.

Zudem war es auch eine Aufgabe der vorliegenden Erfindung, die einzelnen Geräte-Komponenten des Lüftungsgeräts möglichst effizient und platzsparend am Lüftungsgerät anzuordnen.

Die Erfindung löst die ihr zugrunde liegende Aufgabe bei einem Lüftungsgerät mit den Merkmalen nach Anspruch 1. Insbesondere ist an dem Lüftungsgerät ein Gehäuse, das zwei EPS-Schalen aufweist, ein Innenraum-Frischluftanschluss und ein Innenraum-Abluftanschluss, welche, bezogen auf eine Längsrichtung des Lüftungsgerätes, beide auf einer Seite angeordnet sind sowie ein Außenraum-Frischluftanschluss und ein Außenraum-Abluftanschluss, welche bezogen auf die Längsrichtung des Lüftungsgerätes, beide auf der gegenüberliegenden Seite angeordnet sind, ein Aufnahmeraum für einen Wärmeübertrager, wenigstens ein Aufnahmeraum für einen Luftfilter, ein Wärmeübertrager, der in dem Aufnahmeraum angeordnet ist, zwei Radiallüfter, welche jeweils in einem Aufnahmeraum innerhalb des Gehäuses aufgenommen ist und dazu eingerichtet sind, die Frischluft und Abluft im Gegenstrom durch den Wärmeübertrager zu leiten, und eine Kondensatpumpe zum Abführen sich innerhalb des Lüftungsgerätes ansammelnden Kondensats vorgesehen, wobei die Kondensatpumpe an der Außenseite des Gehäuses angeordnet ist und mit einem Kondensatablauf fluidleitend verbunden ist, der wiederum fluidleitend mit dem Inneren des Gehäuses fluidleitend verbunden ist, und wobei die Kondensatpumpe signalleitend mit einem im Inneren des Gehäuses angeordneten Schwimmermodul gekoppelt ist.

Vorzugsweise ist wenigstens ein Luftfilter in dem oder in einem der mehreren Aufnahmeräume angeordnet.

Die Erfindung macht sich hierbei die Erkenntnis zunutze, dass mit dem Anordnen der Kondensatpumpe an der Außenseite des Gehäuses für einen Monteur, insbesondere zu Wartungs- und/oder Instandhaltungszwecken, ein nahezu ungehinderter Zugang zur Kondensatpumpe gegeben ist. Ein aufwendiges Demontieren von zum Beispiel Teilen des Lüftungsgerätes, wie Gehäuseteilen oder anderen Geräte-Komponenten, um an die Kondensatpumpe des Lüftungsgerätes zu gelangen, ist bevorzugt vermieden. Die Kondensatpumpe ist an einem am Gerätegehäuse vorgesehenen Kondensatablauf angeschlossen. Über den Kondensatablauf wird insbesondere sich im Inneren des Lüftungsgerätes angesammeltes Kondensat durch die außenseitig angeordnete Kondensatpumpe aus dem Lüftungsgerät herausgeführt, insbesondere abgesaugt. Die Kondensatpumpe ist bevorzugt mit einem im Inneren des Gehäuses, insbesondere nahe des Wärmeübertragers, angeordneten Schwimmermodul signalleitend gekoppelt. Mit dem Schwimmermodul im Gehäuse wird der Füllstand des angesammelten Kondensates erfasst. Erreicht der Füllstand einen zulässigen Füllstands-Grenzwert, so wird vom Schwimmermodul ein Steuersignal an die Kondensatpumpe übermittelt. Auf Basis dieses durch das Schwimmermodul ausgegebenen Signales beginnt die Kondensatpumpe das Abführen des Kondensats aus dem Inneren des Lüftungsgerätes. Durch die außenseitig angeordnete Kondensatpumpe sind neben der Endmontage des Lüftungsgerätes am Einsatzort auch sich wiederholende Wartungsarbeiten an der Kondensatpumpe des Lüftungsgerätes vereinfacht.

Gemäß einer bevorzugten Weiterbildung des erfindungsgemäßen Lüftungsgerätes weist der Kondensatablauf eine sich von der Außenseite des Gerätes bis in den Aufnahmeraum für den Wärmeübertrager erstreckende Kondensatleitung auf, und das Schwimmermodul ist im Aufnahmeraum für den Wärmeübertrager angeordnet. Damit wird das Kondensat vorzugsweise in dem Bereich des Lüftungsgerätes aufgefangen, in dem das Kondensat größtenteils entsteht. Die Kondensatleitung erstreckt sich durch einen Wandbereich des Gehäuses des Lüftungsgerätes, der bevorzugt einen Wandbereich des Aufnahmeraums für den im Inneren des Lüftungsgerätes aufgenommenen Wärmeübertrager ausbildet.

Bevorzugt ist der Kondensatablauf an einem eine Öffnung eines den Aufnahmeraum für den Wärmeübertrager verschließenden Abdeckelement angeordnet bzw. ausgebildet, wobei das Abdeckelement vorzugsweise an einer im bestimmungsgemäßen Gebrauch des Lüftungsgerätes unteren horizontalen Wandungsfläche des Gehäuses angeordnet ist. Mit dem Vorsehen des Kondensatablaufs in einem entfernbaren Bereich oder Teil des Gehäuses ist bewirkt, dass auch die fluidführende Kondensatleitung ebenfalls zu Wartungszwecken am Lüftungsgerät abnehmbar ist. Bevorzugt ist der Kondensatablauf an einem Abdeckelement angeordnet, mit dem der Aufnahmeraum für den im Inneren des Lüftungsgerätes angeordneten Wärmeübertrager abdichtend verschlossen ist. In einer erfindungsgemäßen Ausführungsform ist das Abdeckelement an der unteren horizontalen Wandungsfläche des Gehäuses angeordnet. Insbesondere bei einem unterhalb einer Raumdecke eines Gebäudes montierten Lüftungsgerät ist die das Abdeckelement aufweisende Wandungsfläche die dem Raum zugewandte Unterseite des Lüftungsgerätes. Das mit dem Kondensatablauf ausgerüstete Abdeckelement bildet somit einen Öffnungsverschluss an einer einfach zugänglichen Stelle des Gehäuses aus. Bevorzugt ist das Abdeckelement über entsprechende Befestigungsmittel mit dem Gehäuse verbunden, die sich bevorzugt von der zugänglichen Unterseite des Lüftungsgerätes aus einfach betätigen lassen.

Gemäß einer bevorzugten Weiterbildung des erfindungsgemäßen Lüftungsgerätes ist das Abdeckelement als Auffangwanne mit einem Bodenteil und zumindest einer im Wesentlichen senkrecht dazu angeordneten umlaufenden Seitenwand für sich im Inneren des Gehäuses ansammelndes Kondensat ausgebildet. Das Abdeckelement, mittels dem der Aufnahmeraum für den Wärmeübertrager verschlossen ist, bildet bevorzugt einen am Gehäuse abnehmbaren Auffangbereich für das Kondensat aus, der in vorgegebenen Zeitabständen vereinfacht gereinigt werden kann. Bevorzugt wird mit dem erfindungsgemäßen Abdeckelement der gesamte Bereich unterhalb des Wärmeübertragers als Auffangwanne ausgebildet. Benachbarte Bereiche, wie beispielsweise die angrenzenden Strömungskanäle für die Frischluft und die Abluft gelangen nicht mit dem Kondensat in Kontakt. In einer möglichen Ausführung der Erfindung ist der Kondensatablauf im Bodenteil des Abdeckelements angeordnet. Die Kondensatleitung verläuft vorzugsweise senkrecht zum Bodenteil, wodurch der Ablauf auf der Unterseite des Lüftungsgerätes angeordnet ist. Im bestimmungsgemäßen Gebrauch des Lüftungsgerätes ist die das Kondensat führende Leitung im Wesentlichen etwa horizontal ausgerichtet. Unter im Wesentlichen horizontal ist im Rahmen der vorliegenden Erfindung horizontal und in einem Winkel bis zu 10° abweichend zur Horizontalen verlaufend zu verstehen.

Bevorzugt ist der Kondensatablauf über die Kondensatleitung mit einem im Bodenteil ausgebildeten tiefergelegten Ablauf der Auffangwanne verbunden, wobei der Ablauf vorzugsweise einem Seitenwandbereich der Auffangwanne zugeordnet ist. Über den tiefergelegten Ablauf im Bodenteil des Abdeckelementes weist das Bodenteil zumindest bereichsweise ein Gefälle auf, wodurch stehendes Kondensat vermieden wird. Dass sich im Inneren am Wärmeübertrager absetzende und an der Innenseite des Abdeckelementes aufgefangene Kondensat wird somit selbsttätig in Richtung des tiefergelegten Ablaufes abgeführt. Die den Kondensatablauf ausbildende Kondensatleitung, welche sich vorzugsweise durch einen Seitenwandbereich der als Auffangwanne ausgebildeten Abdeckelementes erstreckt, weist bevorzugt ein niedrigeres Höhenniveau auf als die Oberseite des übrigen Bereichs des Bodenteiles der Auffangwanne.

Gemäß einer bevorzugten Weiterbildung des erfindungsgemäßen Lüftungsgerätes ist die Kondensatleitung, bezogen auf eine horizontale Ebene, in einem Winkel im Bereich von 0 bis - 10° ausgerichtet und erstreckt sich durch einen vertikal verlaufenden Abschnitt des Abdeckelementes. Die Kondensatleitung weist insbesondere von der Innenseite des Abdeckelementes in Richtung der Außenseite des Abdeckelementes ein Gefälle auf. Der Winkel zwischen einer horizontalen Ebene und einer Längsachse der durch die Seitenwand des Abdeckelementes verlaufenden Kondensatleitung liegt im Bereich zwischen etwa 0 bis - 10°. Die Kondensatleitung fällt demnach von der Innenseite des als Auffangwanne ausgebildeten Abdeckelementes nach außen hin ab. Ein Auf- bzw. Rückstauen von Kondensat wird damit vermieden. Durch das Vorsehen der Kondensatleitung in einem vertikal verlaufenden Wandabschnitt ist zudem ein Höhenaufbau an der Unterseite des erfindungsgemäßen Lüftungsgerätes vermieden.

Vorzugsweise stehen Materialbereiche des Abdeckelements abdichtend in Anlage mit der Öffnung zum Aufnahmebereich für den Wärmeübertrager an der unteren Wandungsfläche des Gehäuses. Bevorzugt wirkt zwischen den aneinander anliegenden Flächenbereichen von Abdeckelement und Gehäuse, welche die Öffnung für den Aufnahmeraum für den Wärmeübertrager begrenzen, eine ausreichend hohe Flächenpressung für eine fluiddichte Abdichtung zwischen dem Gehäuse und dem Abdeckelement. Dadurch wäre im Falle eines Defekts an der Kondensatpumpe vermieden, dass sich im Inneren des Lüftungsgerätes ansammelndes Kondensat über den Verbindungsbereich zwischen dem Abdeckelement als Auffangwanne für das Kondensat und dem verbleibenden Gehäuse hindurchtritt. Für eine abdichtende Anlage zwischen den einander zugewandten Flächenbereichen von Abdeckelement und Gehäuse ist in einer Ausführungsform der Erfindung ein separates Dichtelement vorgesehen, welches umlaufend entlang der Öffnung am Gehäuse des Lüftungsgerätes angeordnet sein kann.

In einer bevorzugten Ausführungsform bildet der Auffangbereich, insbesondere die durch das Abdeckelement ausgebildete Auffangwanne unterhalb des Wärmeübertragers im Vergleich zu den übrigen Bereichen des Lüftungsgerätes einen tiefergelegten Bereich aus. Sollte derzulässige Füllstand des Kondensats innerhalb des Lüftungsgerätes überschritten werden, so wird das sich ansammelnde Kondensat, aufgrund dessen der Auffangbereich tiefer gelegen ist als die übrigen Bereiche des Lüftungsgerätes, an einem Übertreten in benachbarte Teile des Lüftungsgerätes behindert. Eine Kontamination von beispielsweise dem Luftfilter mit Kondensat oder ein Kontakt einer Zusatz-Heizeinrichtung mit dem Kondensat ist vermieden.

Eine Weiterbildung der Erfindung sieht vor, dass die Kondensatpumpe mittels einer Halteeinrichtung mit wenigstens einem Hakenelement an einer seitlichen Umfangswandung des Gehäuses aufgenommen ist. Vorzugsweise ist die mit dem Kondensatablauf verbundene Kondensatpumpe mittels der erfindungsgemäßen Halteeinrichtung an der seitlichen äußeren Umfangswandung des Gehäuses befestigt. Vorzugsweise weisen die Hakenelemente Sicherungen auf, wodurch ein unbeabsichtigtes Aushängen der Kondensatpumpe am Lüftungsgerät behindert ist. Vorzugweise ist eine Halteeinrichtung mit zwei im Abstand zueinander angeordneten Hakenelementen vorgesehen. Darüber ist eine Zweipunktaufhängung der Kondensatpumpe an der Außenseite des Gehäuses bewirkt. Damit ist eine exakte Ausrichtung der Kondensatpumpe am Gehäuse auf einfache Weise erreicht.

Ferner zeichnet sich das erfindungsgemäße Lüftungsgerät gemäß einer weiteren Ausgestaltung der Erfindung durch eine mit den im oder an dem Gehäuse angeordneten Geräte-Komponenten zumindest signalübertragend gekoppelte Steuer- und Versorgungseinrichtung aus. Mit Hilfe der Steuer- und Versorgungseinrichtung erfolgt eine gezielte Ansteuerung bzw. Betätigung der verschiedenen Geräte-Komponenten auf Basis eines in der Steuer- und Versorgungseinrichtung hinterlegten Steuerungsprogramms. Des Weiteren erfolgt mittels der Steuer- und Versorgungseinrichtung eine elektrische Versorgung der Geräte-Komponenten, wie zum Beispiel eines Ventilators oder einer Zusatz-Heizeinrichtung. Beispielsweise können die Kondensatpumpe und das Schwimmermodul mit der Steuer- und Versorgungseinrichtung gekoppelt sein. Erfasst das Schwimmermodul das Erreichen des zulässigen Füllstands im Auffangbereich für das Kondensat, so gibt dieses ein entsprechendes elektrisches Signal an die Steuer- und Versorgungseinrichtung ab. Die Steuer- und Versorgungseinrichtung ist wiederum dazu eingerichtet, die Kondensatpumpe bedarfsgerecht anzusteuern, in Folge dessen das Kondensat mittels der Kondensatpumpe aus dem Inneren des erfindungsgemäßen Lüftungsgerätes abgeführt wird.

Vorzugsweise weist das Gehäuse an seiner Außenseite, insbesondere seinen parallel zur Längsrichtung des Lüftungsgerätes verlaufenden seitlichen Umfangswandungen mehrere Montagehalterungen auf. Mit Hilfe der an den Seitenwänden des Gehäuses angeordneten Montagehalterung, ist das Lüftungsgerät einfach unterhalb einer Raumdecke bzw. in einer Zwischendecke eines Gehäuses montierbar. Die Montagehalterungen sind vorzugsweise als Winkelbleche ausgeführt, wobei ein Schenkel des Winkelbleches an der seitlichen Umfangswandung des Gehäuses angeordnet ist. Der im Wesentlichen senkrecht an der Umfangswandung des Gehäuses abstehende Schenkel des Winkelbleches weist wenigstens eine Ausnehmung oder einen Durchbruch auf, mit dem ein an einer Raumdecke montierbarer Bolzen in haltende Wirkverbindung bringbar ist.

Nachfolgend wird die Erfindung anhand eines möglichen Ausführungsbeispiels unter Bezugnahme auf die beigefügten Figuren näher beschrieben. Hierbei zeigen:
- Fig. 1:: schematisch und exemplarisch eine perspektivische Ansicht eines erfindungsgemäßen Lüftungsgerätes im Schnitt;
- Fig. 2:: schematisch und exemplarisch eine Ansicht des in Fig. 1 gezeigten Lüftungsgerätes;
- Fig. 3:: eine perspektivische Ansicht des Lüftungsgerätes aus Fig.1 und 2 von seiner Unterseite, und
- Fig. 4:: eine perspektivische Teilansicht des Lüftungsgerätes mit seiner Kondensatpumpe, und
- Fig. 5:: eine perspektivische Ansicht des Lüftungsgerätes aus Fig.1 im Längsschnitt, und
- Fig. 6:: eine vergrößerte Ansicht der Einrahmung VI aus Fig. 5.

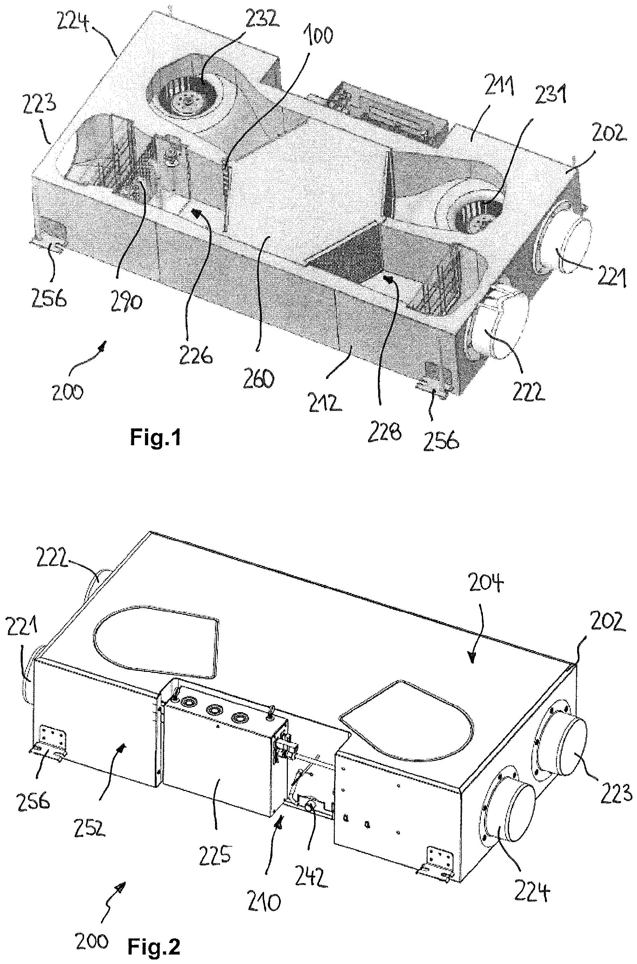

Fig. 1 zeigt eine schematische Darstellung eines erfindungsgemäßen Lüftungsgeräts 200 im Schnitt. Das Lüftungsgerät 200 ist beispielsweise zum Einbau in einem eingeschränkten Raum unterhalb einer Raumdecke eines Gebäudes konzipiert. Das Lüftungsgerät 200 weist ein Gehäuse 202 mit mehreren Anschlüssen 221 bis 224, zum Beispiel jeweils einen Auslass und Einlass von Frischluft und Abluft, einen Wärmeübertrager 260, zwei EPS-Schalen 211, 212, zwei Radiallüfter 231, 232 sowie einen Aufnahmeraum 270 mit einem Luftfilter 280 sowie eine Verkeileinheit 100 auf. Der Wärmeübertrager 260 wird mittels einer Verkeileinheit 100 in der Montageposition gehalten und luftdicht montiert, so dass kein Fluidübertrag zwischen Zuluft und Abluft möglich ist. Die Verkeileinheit 100 ermöglicht eine einfache Wartung und Montage des Wärmeübertragers 260, auch in einer Einbausituation unter einer Raumdecke, bei der ein Zugriff auf die Komponenten über Kopf erfolgen muss.

Fig. 1 zeigt das Lüftungsgerät 200 in der Einbausituation an einer Decke von oben. Es ist eine Montageseite 204 des Lüftungsgeräts 200 zu sehen. Es ist gut erkennbar, dass die vorstehend genannten Geräte-Komponenten 231, 232, 260, 280, 290 des Lüftungsgeräts 200 im Wesentlichen in einer Ebene angeordnet sind. Die Radiallüfter 231, 232 sind dabei so angeordnet, dass sie den Frischluft- bzw. Abluftstrom durch den Wärmeübertrager 260 ziehen. Frischluft und Abluft operieren dabei im Gegenstrom. Die spezifische Anordnung erfüllt besonders geschickt die Anforderungen für einen räumlich begrenzten Raum und ermöglicht durch die Verwendung von Radiallüftern dennoch das Fördern eines großen Volumenstroms durch das Lüftungsgerät 200.

Der Wärmeübertrager 260 ist in diesem Beispiel hexagonal, was den Raum vorteilhaft ausnutzt, aber auch andere Formen von Wärmeübertragern sind in anderen Ausführungen denkbar. In diesem Beispiel ist ferner ein Luftfilter 280 in einem Aufnahmeraum 270 gezeigt. In anderen Beispielen können auch andere Luftfilter und/oder andere Elemente, wie beispielsweise Zusatz-Heizeinrichtung 290, in einem Aufnahmeraum 285 angeordnet sein. Ferner können weitere Aufnahmeräume auch an anderen Positionen im Strömungspfad angeordnet sein. Vorzugsweise wird die Außenluft vor Durchströmen des Wärmeübertragers 260 gefiltert, um eine Verschmutzung des Wärmeübertragers 260 zu verringern und die Wartungsintervalle zu verlängern.

Fig. 2 zeigt das erfindungsgemäße Lüftungsgerät 200 aus Fig. 1 bei geschlossenem Gehäuse 202 mit Blick auf die Montageseite 204. In Fig. 2 ist ein erfindungsgemäßer Kondensatablauf 242 und eine Steuer- und Versorgungseinheit 225 zu sehen, welche in einer Aussparung 210 an einer seitlichen Umfangswandung 252 einer der Längsseiten des Gehäuses 202 angeordnet sind.

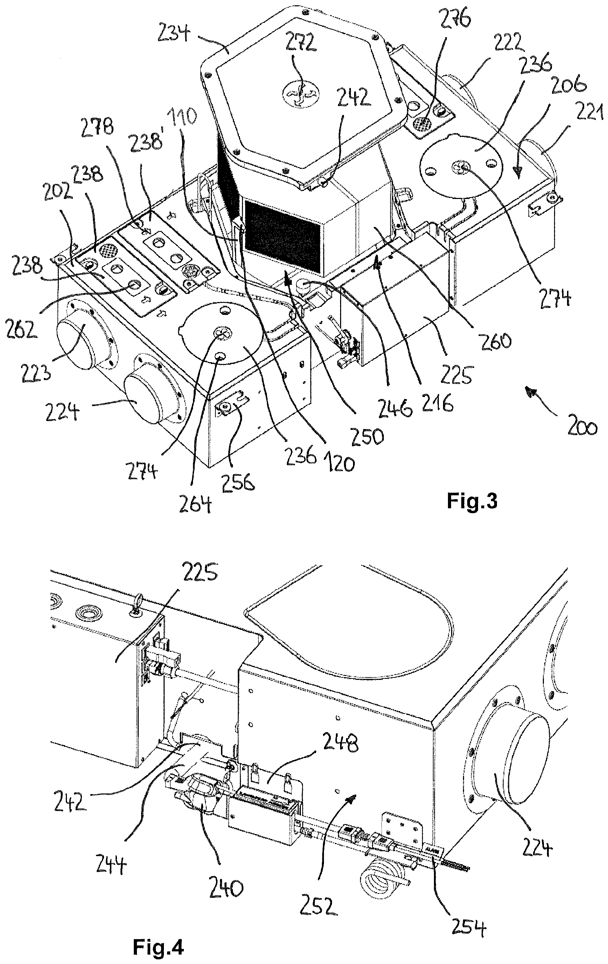

Fig. 3 zeigt eine perspektivische Ansicht des erfindungsgemäßen Lüftungsgerätes 200 mit seinem Gehäuse 202 von unten und somit von der dem Raum zugewandten Unterseite 206, beispielsweise im Fall einer Einbausituation unterhalb der Raumdecke. Die zugängliche Unterseite 206 ist der Montageseite 204 gegenüberliegend angeordnet. In der die Unterseite 206 ausbildenden Wandungsfläche 208 sind jeweils Öffnungen vorgesehen, über die die Geräte-Komponenten 231, 232, 260, 280, 290 in die oder aus den Aufnahmeräumen 230, 250, 270, 285 am Gehäuse 202 entnommen und/oder darin eingesetzt werden können.

In einer Ausführungsform der Erfindung werden die Öffnungen mittels Abdeckelementen 234, 236, 238, 238' verschlossen, wobei die Abdeckelemente mit der Wandungsfläche 208 eine gemeinsame Ebene ausbilden. Das Ansteuern und die Energieversorgung der an oder innerhalb des Gehäuses angeordneten elektrischen Geräte-Komponente, wie der Radiallüfter 231, 232 und der Zusatz-Heizeinrichtung 290 erfolgt mittels der an der umfangsseitigen Außenfläche des Gehäuses 202 in der Aussparung 210 angeordneten Steuer- und Versorgungseinheit 225. Die Steuer- und Versorgungseinheit 225 ist dabei so in der Aussparung 210 eingesetzt, dass diese nicht über die äußeren Abmessungen des Gehäuses 202 vorsteht.

Wie ferner aus Fig. 3 ersichtlich, sind an den die Öffnungen aufweisenden Wandungsfläche 208 bzw. den die Öffnungen verschließenden Abdeckelementen 234 bis 238' jeweils Prägungen 272, 274, 276 vorgesehen, welche bspw. die Art der in einem jeweiligen Aufnahmeraum 230, 250, 270, 285 ausgebildeten Geräte-Komponente definiert und/oder die Strömungsrichtung der durch die Komponente strömenden Frischluft oder Abluft angeben.

Wie die Fig. 3 zudem verdeutlicht, ist der Wärmeübertrager im mittleren Aufnahmeraum 250 des Gehäuses 202 aufgenommen, dessen Öffnung 216 mittels des Abdeckelementes 236 verschlossen wird. Die Radiallüfter 231, 232 sind in den im Gehäuse ausgebildeten Strömungskanälen in Strömungsrichtung hinter dem Wärmeübertrager 260 angeordnet, sodass die Radiallüfter die Abluft und die Frischluft jeweils durch das Lüftungsgerät saugen.

Der Wärmeübertrager 260 ist mittels der in Fig. 3 gezeigten Verkeileinheit 100 innerhalb des Aufnahmeraumes 250 arretiert, die vor dem Entnehmen des Wärmeübertragers zu lösen ist. Mittels der Verkeileinheit 100 erfolgt das Verklemmen des Wärmeübertragers im Gehäuse 202 und die Abdichtung zwischen den voneinander zu trennenden Strömungskanälen und die Abluft. Die Verkeileinheit umfasst einen Klemmabschnitt 110 und einen Griffabschnitt 120. Vorzugsweise ist die Verkeileinheit 100 als Spritzgussteil ausgestaltet, wobei Verstrebungen eine Stabilität der Verkeileinheit 100 sichern, ohne dass die Verkeileinheit 100 als Massivbauteil auszugestalten ist.

Wie die Fig. 3 ferner zeigt, sind an den Abdeckelementen 234, 236 als Griffmulden ausgebildete Handhaben 262, 264 zum Greifen von zumindest den Abdeckelementen 236, 238 vorgesehen. Ferner sind an den seitlichen Umfangswandungen 252 des Gehäuses 202 Montagehalterungen 256 für das unterhalb einer Raumdecke anzuordnende Lüftungsgerät 200 angeordnet. Über die Montagehalterungen 256 und mit den Montagehalterungen zusammenwirkende in einer Raumdecke zu befestigende Gewindestangen, wird das Lüftungsgerät 200 unterhalb der Raumdecke aufgehängt. Wie aus Fig. 3 ebenfalls ersichtlich, ist der Kondensatablauf 242 an dem Abdeckelement 234 angeordnet, das zu Wartung- und/oder Instandhaltungszwecken abnehmbar vom Gehäuse 202 des Lüftungsgerätes 200 ausgebildet ist.

Fig. 4 zeigt eine vergrößerte Ansicht des Lüftungsgerätes und der daran angeordneten Kondensatpumpe 240, welche mittels einer Verbindungsleitung 244 an dem Kondensatablauf 242 angeschlossen ist. Weiterhin ist die Kondensatpumpe 240 mit einem in Fig. 3 gezeigten Schwimmermodul 246 signalleitend gekoppelt, welches den Füllstand des Kondensats innerhalb des Gehäuses 202 überwacht bzw. erfasst. Die Kondensatpumpe 240 ist mittels einer Halteeinrichtung 248 an einer Umfangswandung 252 des Gehäuses 202 angeordnet. In einer bevorzugten Ausführungsform ist die Kondensatpumpe 240 über eine Alarmleitung 254 mit einer zentralen Alarm- und Meldezentrale gekoppelt, an die im Störfall Alarmsignale übermittelt werden.

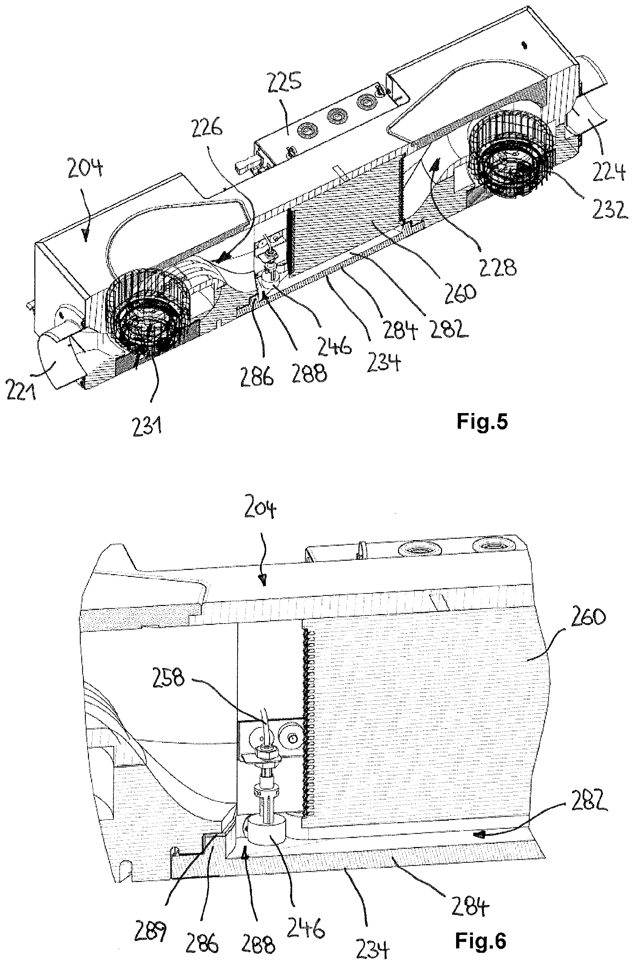

Fig. 5 zeigt die Ausgestaltung des Abdeckelementes 234 auf seiner Innenseite, wobei das Abdeckelement als Auffangwanne 282 ausgebildet ist. Das Abdeckelement 234 weist ein Bodenteil 284 und eine im Wesentlichen senkrecht dazu angeordnete umlaufende Seitenwand 286 für das sich ansammelnde Kondensat auf. Wie die Fig. 5 und 6 zeigen ist im Bodenteil 284 ein tiefer gelegter Ablauf 288 vorgesehen. Der Kondensatablauf 242 umfasst eine nicht näher gezeigte, sich durch die Seitenwand 286 erstreckende Kondensatleitung, welche die Verbindung zwischen dem Inneren des Gehäuses 202 und der Außenseite des Gehäuses herstellt. Das Schwimmermodul 246 ist, wie aus Fig. 6 ersichtlich, im Bereich des tiefer gelegten Ablaufs 288 angeordnet. Wie aus Fig. 5 und 6 ferner ersichtlich, ist das Abdeckelement 234 mit seiner Auffangwanne 282 im bestimmungsgemäßen Gebrauch des Lüftungsgerätes unterhalb des Wärmeübertragers 260 im Aufnahmeraum 250 angeordnet. Die Auffangwanne 282 bildet im Vergleich zu den benachbarten Bereichen eine Senke innerhalb des Lüftungsgerätes aus. Sich in benachbarten Bereichen des Lüftungsgerätes 200 ansammelndes Kondensat wird bevorzugt in Richtung der auf der Innenseite des Abdeckelementes 234 ausgebildeten Auffangwanne 282 abgeführt.

Die vergrößerte Ansicht in Fig. 6 zeigt, dass die Anlagefläche des Abdeckelementes 234 und die Öffnung 216 in den Aufnahmeraum 250 für den Wärmeübertrager des Gehäuses 202 eine stufenförmige Ausgestaltung für eine abdichtende Verbindung der miteinander in Anlage bringbaren Flächen aufweist. Zusätzlich ist zwischen den Anlageflächen ein separates Dichtelement 289 vorgesehen. Das Schwimmermodul 246 ist über die Signalleitung 258 mit der Kondensatpumpe 240 verbunden.

### Bezugszeichenliste

- 200: Lüftungsgerät
- 202: Gehäuse
- 204: Montageseite
- 206: Unterseite
- 208: Wandungsfläche
- 210: Aussparung
- 216: Öffnung
- 221: Innenraum-Frischluftanschluss
- 222: Innenraum-Abluftanschluss
- 223: Außenraum-Frischluftanschluss
- 224: Außenraum-Abluftanschluss
- 225: Steuer- und Versorgungseinheit
- 226, 228: Strömungskanal
- 230, 250, 270, 285: Aufnahmeraum
- 231, 232, 260, 280, 290: Geräte-Komponente
- 234, 236, 238, 238': Abdeckelemente
- 240: Kondensatpumpe
- 242: Kondensatablauf
- 244: Verbindungsleitung
- 246: Schwimmermodul
- 248: Halteeinrichtung
- 252: Umfangswandung
- 254: Alarmleitung
- 256: Montagehalterung
- 258: Signalleitung
- 262,264: Handhabe
- 272, 274, 276, 278: Prägung
- 282: Auffangwanne
- 284: Bodenteil
- 286: Seitenwand
- 288: Ablauf
- 289: Dichtelement

## Patentansprüche

1. Lüftungsgerät (200) mit
- einem Gehäuse (202), das zwei EPS-Schalen (211, 212) aufweist,
- einem Innenraum-Frischluftanschluss (221) und einem Innenraum-Abluftanschluss (222), welche, bezogen auf eine Längsrichtung des Lüftungsgeräts, beide auf einer Seite angeordnet sind, sowie einem Außenraum-Frischluftanschluss (223) und einem Außenraum-Abluftanschluss (224), welche, bezogen auf die Längsrichtung des Lüftungsgeräts, beide auf der gegenüberliegenden Seite angeordnet sind,
- einem Aufnahmeraum (250) für einen Wärmeübertrager (260),
- wenigstens einem Aufnahmeraum (270) für einen Luftfilter (280),
- einem Wärmeübertrager (260), der in dem Aufnahmeraum (250) angeordnet ist,
- zwei Radiallüftern (231, 232), welche jeweils in einem Aufnahmeraum (230) innerhalb des Gehäuses aufgenommen und dazu eingerichtet sind, die Frischluft und Abluft im Gegenstrom durch den Wärmeübertrager zu leiten,
- einer Kondensatpumpe (240) zum Abführen sich innerhalb des Lüftungsgerätes ansammelnden Kondensats,
**dadurch gekennzeichnet, dass** die Kondensatpumpe (240) an der Außenseite des Gehäuses (202) angeordnet ist und mit einem Kondensatablauf (242) fluidleitend verbunden ist, der wiederum fluidleitend mit dem Inneren des Gehäuses (202) fluidleitend verbunden ist, und
die Kondensatpumpe (240) mit einem im Inneren des Gehäuses (202) angeordneten Schwimmermodul (202) signalleitend gekoppelt ist.

2. Lüftungsgerät nach Anspruch 1,
wobei der Kondensatablauf (242) eine sich von der Außenseite bis in den Aufnahmeraum (250) für den Wärmeübertrager (260) erstreckende Kondensatleitung aufweist, und das Schwimmermodul (246) im Aufnahmeraum (250) für den Wärmeübertrager (260) angeordnet ist.

3. Lüftungsgerät nach Anspruch 1 oder 2,
wobei der Kondensatablauf (242) an einem eine Öffnung (214) eines den Aufnahmeraum (250) für den Wärmeübertrager (260) verschließenden Abdeckelement (234) angeordnet ist, wobei das Abdeckelement (234) vorzugsweise an einer im bestimmungsgemäßen Gebrauch des Lüftungsgerätes (200) unteren horizontalen Wandungsfläche (208) des Gehäuses (202) angeordnet ist.

4. Lüftungsgerät nach Anspruch 3,
wobei das Abdeckelement (234) als Auffangwanne (282) mit einem Bodenteil (284) und einer im Wesentlichen senkrecht dazu angeordneten umlaufenden Seitenwand (286) für sich im Inneren des Gehäuses (202) sammelndes Kondensat ausgebildet ist.

5. Lüftungsgerät nach einem der vorhergehenden Ansprüche,
wobei der Kondensatablauf (242) mit einem im Bodenteil (284) ausgebildeten tiefergelegten Ablauf (288) der Auffangwanne (282) verbunden ist, der vorzugsweise einem Bereich der Seitenwand (286) der Auffangwanne (282) zugeordnet ist.

6. Lüftungsgerät nach einem der vorhergehenden Ansprüche,
wobei die Kondensatleitung, bezogen auf eine horizontale Ebene, in einem Winkel im Bereich von 0 bis -10° ausgerichtet ist und sich durch einen vertikal verlaufenden Wandabschnitt des Abdeckelements (234) erstreckt.

7. Lüftungsgerät nach Anspruch 4 bis 6,
wobei Materialbereiche des Abdeckelements (234) vorzugsweise abdichtend in Anlage mit einer Öffnung zum Aufnahmeraum (250) für den Wärmeübertrager (260) an der unteren Wandungsfläche des Gehäuses (202) stehen.

8. Lüftungsgerät nach einem der vorhergehenden Ansprüche,
wobei die Kondensatpumpe (240) mittels einer Halteeinrichtung (248) mit wenigstens einem Hakenelement an einer seitlichen Umfangswandung (252) des Gehäuses (202) aufgenommen ist.

9. Lüftungsgerät nach einem der vorhergehenden Ansprüche,
**gekennzeichnet durch** eine mit den im oder an dem Gehäuse (202) angeordneten Geräte-Komponenten (231, 232, 290) zumindest signalübertragend gekoppelte Steuer- und Versorgungseinrichtung (225).

10. Lüftungsgerät nach einem der vorhergehenden Ansprüche,
wobei das Gehäuse (202) an seiner Außenseite, insbesondere seinen parallel zur Längsrichtung des Lüftungsgerätes (200) verlaufenden seitlichen Umfangswandungen (252) mehrere Montagehalterungen (256) aufweist.

## Claims

1. A ventilation unit (200), comprising:
- a casing (202) having two EPS shells (211, 212)
- an indoor fresh air connection (221) and an indoor extract air connection (222), both of which are disposed on one side with respect to a longitudinal direction of the ventilation unit, and an outdoor fresh air connection (223) and an outdoor extract air connection (224), both of which are disposed on the opposite side with respect to the longitudinal direction of the ventilation unit,
- an accommodating space (250) for a heat exchanger (260),
- at least one accommodating space (270) for an air filter (280),
- a heat exchanger (260) disposed in the accommodating space (250),
- two radial fans (231, 232), each accommodated in an accommodating space (230) within the casing and arranged to route the fresh air and the extract air through the heat exchanger in a countercurrent,
- a condensate pump (240) for removing condensate accumulating within the ventilation unit,
**characterised in that** the condensate pump (240) is disposed at the outside of the casing (202) and is connected to carry fluid to a condensate drain (242), which is in turn connected to carry fluid to the interior of the casing (202), and
the condensate pump (240) is coupled in a signal-conducting manner with a float module (202) disposed in the interior of the casing (202).

2. The ventilation unit according to claim 1,
wherein the condensate drain (242) comprises a condensate line extending from the outside into the accommodating space (250) for the heat exchanger (260), and the float module (246) is disposed in the accommodating space (250) for the heat exchanger (260).

3. The ventilation unit according to claim 1 or 2,
wherein the condensate drain (242) is disposed at a cover element (234) closing an opening (214) of the accommodating space (250) for the heat exchanger (260), wherein the cover element (234) is preferably disposed at a lower horizontal wall surface (208) of the casing (202) in the intended use of the ventilation unit (200).

4. The ventilation unit according to claim 3,
wherein the cover element (234) is formed as a drip pan (282) with a bottom part (284) and a circumferential side panel (286) disposed essentially perpendicular thereto, for condensate accumulating inside the casing (202).

5. The ventilation unit according to one of the preceding claims,
wherein the condensate drain (242) is connected to a lower drain (288) of the drip pan (282), formed in the bottom part (284), which is preferably associated with a region of the side panel (286) of the drip pan (282).

6. The ventilation unit according to one of the preceding claims,
wherein the condensate line is oriented at an angle in the range of 0 to -10° with respect to a horizontal plane and extends through a vertically extending wall portion of the cover element (234).

7. The ventilation unit according to claims 4 to 6,
wherein material regions of the cover element (234) are preferably in sealing abutment with an opening to the accommodating space (250) for the heat exchanger (260) at the lower wall surface of the casing (202).

8. The ventilation unit according to one of the preceding claims,
wherein the condensate pump (240) is accommodated on a lateral peripheral wall (252) of the casing (202) via a mounting device (248) with at least one hook element.

9. The ventilation unit according to one of the preceding claims,
**characterised by** a control and supply device (225) coupled in at least a signal-conducting manner with the unit components (231, 232, 290) disposed in or on the casing (202).

10. The ventilation unit according to one of the preceding claims,
wherein the casing (202), at its outer side, especially its lateral peripheral walls (252) extending parallel to the longitudinal direction of the ventilation unit (200), includes multiple mounting brackets (256).

## Revendications

1. Appareil de ventilation (200) comportant
- un boîtier (202) présentant deux coques en EPS (211, 212),
- un raccord air neuf/espace intérieur (221) et un raccord air extrait/espace intérieur (222) qui, par rapport à une direction longitudinale de l'appareil de ventilation, sont tous deux disposés sur un côté, ainsi qu'un raccord air neuf/espace extérieur (223) et un raccord air extrait/espace extérieur (224) qui, par rapport à la direction longitudinale de l'appareil de ventilation, sont tous deux disposés sur le côté opposé,
- un espace de réception (250) destiné à un échangeur de chaleur (260),
- au moins un espace de réception (270) destiné à un filtre à air (280),
- un échangeur de chaleur (260) disposé dans l'espace de réception (250),
- deux ventilateurs radiaux (231, 232) respectivement reçus dans un espace de réception (230) situé dans le boîtier et conçus pour guider l'air neuf et l'air extrait en écoulement inverse à travers l'échangeur de chaleur,
- une pompe à condensat (240) destinée à évacuer le condensat s'accumulant dans l'appareil de ventilation,
**caractérisé en ce que** la pompe à condensat (240) est disposée sur le côté extérieur du boîtier (202) et est reliée à un dispositif d'évacuation de condensat (242) par liaison conductrice de fluide, lequel est lui-même relié à l'intérieur du boîtier (202) par liaison conductrice de fluide, et
la pompe à condensat (240) est couplée par liaison conductrice de signaux à un module de flotteur (202) disposé à l'intérieur du boîtier (202).

2. Appareil de ventilation selon la revendication 1,
dans lequel le dispositif d'évacuation de condensat (242) présente une conduite de condensat s'étendant depuis le côté extérieur jusqu'à l'espace de réception (250) destiné à l'échangeur de chaleur (260), et le module de flotteur (246) est disposé dans l'espace de réception (250) destiné à l'échangeur de chaleur (260).

3. Appareil de ventilation selon la revendication 1 ou 2,
dans lequel le dispositif d'évacuation de condensat (242) est disposé sur un élément de recouvrement (234) fermant une ouverture (214) de l'espace de réception (250) destiné à l'échangeur de chaleur (260), l'élément de recouvrement (234) étant de préférence disposé, lorsque l'appareil de ventilation (200) est utilisé conformément à l'utilisation prévue, sur une surface de paroi (208) inférieure horizontale du boîtier (202).

4. Appareil de ventilation selon la revendication 3,
dans lequel l'élément de recouvrement (234) est réalisé sous la forme d'un bac de récupération (282) doté d'une partie de fond (284) et d'une paroi latérale (286) périphérique, disposée sensiblement perpendiculairement à celle-ci, et destiné au condensat s'accumulant à l'intérieur du boîtier (202).

5. Appareil de ventilation selon l'une quelconque des revendications précédentes, dans lequel le dispositif d'évacuation de condensat (242) est relié à un dispositif d'évacuation (288) propre au bac de récupération (282) et réalisé en creux dans la partie de fond (284), ledit dispositif d'évacuation (288) étant de préférence associé à une zone de la paroi latérale (286) du bac de récupération (282).

6. Appareil de ventilation selon l'une quelconque des revendications précédentes, dans lequel la conduite de condensat est orientée, par rapport à un plan horizontal, selon un angle compris entre 0 et -10° et s'étend à travers une partie de paroi verticale de l'élément de recouvrement (234).

7. Appareil de ventilation selon les revendications 4 à 6,
dans lequel des zones matérielles de l'élément de recouvrement (234) sont de préférence en contact étanchéifiant avec une ouverture donnant sur l'espace de réception (250) destiné à l'échangeur de chaleur (260) sur la surface de paroi inférieure du boîtier (202).

8. Appareil de ventilation selon l'une quelconque des revendications précédentes, dans lequel la pompe à condensat (240) est reçue sur une paroi périphérique (252) latérale du boîtier (202) au moyen d'un dispositif de retenue (248) doté d'au moins un élément crochu.

9. Appareil de ventilation selon l'une quelconque des revendications précédentes, **caractérisé par** un dispositif de commande et d'alimentation (225) couplé au moins par liaison de transmission de signaux aux composants de l'appareil (231, 232, 290) disposés dans ou sur le boîtier (202).

10. Appareil de ventilation selon l'une quelconque des revendications précédentes, dans lequel le boîtier (202) comporte plusieurs supports de montage (256) sur son côté extérieur, en particulier ses parois périphériques (252) latérales parallèles à la direction longitudinale de l'appareil de ventilation (200).
